# EUROPEAN PATENT SPECIFICATION

(11) **EP 1 916 600 B1**
(45) Date of publication and mention of the grant of the patent: **01.07.2009**
(21) Application number: 07119056.5
(22) Date of filing: 23.10.2007
(51) Int. Cl.: G06F 9/46, H04L 29/06, H04L 29/08, B25J 9/00, G05B 19/00

(54) **Network robot system and method of communication therein**
Vernetztes Robotersystem und Kommunikationsverfahren
Système de robot en réseau et procédé de communication

(30) Priority: 23.10.2006 KR 20060103163
(43) Date of publication of application: 30.04.2008
(73) Proprietor: Electronics and Telecommunications Research Institute, Daejeon (KR)
(72) Inventor: Lee, Kang Woo, Daejeon (KR); Suh, Young Ho, Gwangju (KR); Moon, Ae Kyeung, Daejeon (KR); Kim, Hyun, Daejeon (KR); Park, Nam Shik, Daejeon (KR); Hong, Chung Seong, Daejeon (KR); Kim, Min Young, Chungcheongbook-do (KR)
(74) Representative: Betten & Resch

(56) References cited:
- US-A1- 2002 178 273
- US-A1- 2005 090 907
- DOUGLAS C SCHMIDT ET AL: "Developing Next-Generation Distributed Applications with QoS-Enabled DPE Middleware" IEEE COMMUNICATIONS MAGAZINE, IEEE SERVICE CENTER, PISCATAWAY, US, vol. 38, no. 10, October 2000 (2000-10), pages 112-123, XP011091368 ISSN: 0163-6804

## Description

### BACKGROUND OF THE INVENTION

### Field of the Invention

The present invention relates to a method and a system of communication in a robot system, and more particularly, to a network robot system for distributed processing of functions of robots via a network and to a communication method in the network robot system.

### Description of the Related Art

In general, robots have three functional elements including sensing an external environment, making judgments based on the sensing information and performing according to the judgment results, and accordingly are equipped with devices for processing these functions. To add various or new functions to the robots, however, a complex configuration and expensive equipment is required, thus increasing costs.

Therefore, in order to provide less expensive robots, a network robot system for distributed processing of the functions of the robots via a network is undergoing development.

In general, a network robot system is formed of a distributed system including a plurality of robot clients and a server, in which network communication is performed by exchanging messages between the robot clients and the server via a communication middleware. In this case, the middleware incorporates an object-oriented concept and performs a remote method invocation (RMI), and other various methods including distributed component object model (DCOM), common object request broker architecture (CORBA), remote method invocation (RMI) and extensible markup language (XML) web services have been proposed and employed.

US 2002/178273 provides synchronous and asynchronous operation in a distributed computing platform.

However, these types of middleware do not suitably satisfy the needs, and thus are inadequate for use between the robots and the server. That is, since DCOM or RMI are limited to a specific operating system or language, they are not efficient for various operating systems and languages of robots. CORBA, on the other hand, supports various operating systems and languages but has a low usage value because it is too heavy to be mounted to a device environment with relatively limited resources like an embedded system. In addition, the XML web services use messages in XML format, which are large in size and slow in response. Also, since they are based on Hypertext Transfer Protocol (HTTP), it is difficult to use them to access a private network and the like.

Furthermore, with limited resources, the network robot system is not capable of transmitting operations performed for a long term and large-sized data such as in processing navigation, voice synthesis, streaming data and the like. Therefore, the existing communication middleware is inadequate for use in a network robot system.

### SUMMARY OF THE INVENTION

An aspect of the present invention provides a network robot system in which an external sensing function and an external processing function are performed via a network, and a communication method in the network robot system.

An aspect of the invention also provides a network robot system supporting transmission of operations performed for a long term and large-sized data such as in robot navigation, voice synthesis of one of a robot or a software robot and image processing and the like, and a communication method in the network robot system.

An aspect of the invention also provides a network robot system providing an improved data encoding method for efficient communication with a robot with limited resources, and a communication method in the network robot system.

According to an aspect of the invention, there is provided a communication method in a network robot system having a middleware processing communication between a plurality of sensors, a server, and a robot, the method including: setting previously a communication framework of the middleware for distributed processing of function of the robot by using the plurality of sensors and the server; and performing a communication between the plurality of sensors, the server and the robot by using the communication framework set previously, wherein one of synchronous and asynchronous operations is performed according to a size of data for a remote object called from the robot.

According to another aspect of the invention, there is provided a network robot system including: a robot providing services by recognizing external environment information; a plurality of sensors for distributed processing of functions of the robot sensing the external environment information; a server for distributed processing of service-processing functions of the robot according to the external environment information; a middleware connecting the plurality of sensors located in a remote place, the server and the robot and setting a communication framework previously for remote communication between the plurality of sensors, the server, and the robot, wherein the middleware performs synchronous and asynchronous operations according to a size of data for a remote object called from the robot.

### BRIEF DESCRIPTION OF THE DRAWINGS

The above and other aspects, features and other advantages of the present invention will be more clearly understood from the following detailed description taken in conjunction with the accompanying drawings, in which:

FIG. 1 is a configuration view illustrating a structure of a network robot system according to an exemplary embodiment of the present invention;

FIG. 2 is a view illustrating a concept of remote method invocation (RMI) in a general distributed system;

FIG. 3 is a configuration view illustrating communication layers in the network robot system according to an exemplary embodiment of the present invention;

FIG. 4 is a flowchart illustrating a process of communication of a synchronized operation layers in the network robot system according to an exemplary embodiment of the present invention;

FIG. 5 is a view illustrating a data format transmitted between a robot and a server in the network robot system according to an exemplary embodiment of the present invention; and

FIG. 6 is a view illustrating a format of messages transmitted between the robot and the server in the network robot system according to an exemplary embodiment of the present invention.

### DETAILED DESCRIPTION OF THE PREFERRED EMBODIMENT

Exemplary embodiments of the present invention will now be described in detail with reference to the accompanying drawings. It should be noted that the same reference numerals are used to designate the same or like components throughout the drawings. In the following description, well-known functions and constructions are not described in detail since they would obscure the invention in unnecessary detail.

Before describing an apparatus and a method of communication according to an exemplary embodiment of the present invention, following conditions may be taken into consideration with respect to exemplary embodiments of the present invention.

First, as a network robot system requires a light protocol to minimize a transmission message, the transmission message is encoded in a very simple binary format, in consideration of not only a computing environment but also a device environment such as an embedded system with relatively limited resources.

Second, a network robot system should be capable of operating independently of a specific platform or language, in consideration of applications developed in various operating systems or languages.

Third, since a network robot system employs relatively unstable wireless communication, re-connection after an interruption should be as clear as possible to an application developer in coping with the interruption of communication.

Fourth, methods for effective processing and transmission of large-sized data such as voices, images and the like should be considered for a network robot system.

On the basis of the above-described considerations, a communication system of a network robot system is proposed according to an exemplary embodiment of the present invention. Hereinafter, a method and an apparatus for communication, in which different types of robots provide various services by utilizing various functions such as voice recognition, image recognition, situation awareness, robot control command and robot services provided from an external server computer, will be described in detail.

Now, a structure of the network robot system according to an exemplary embodiment of the present invention will be described.

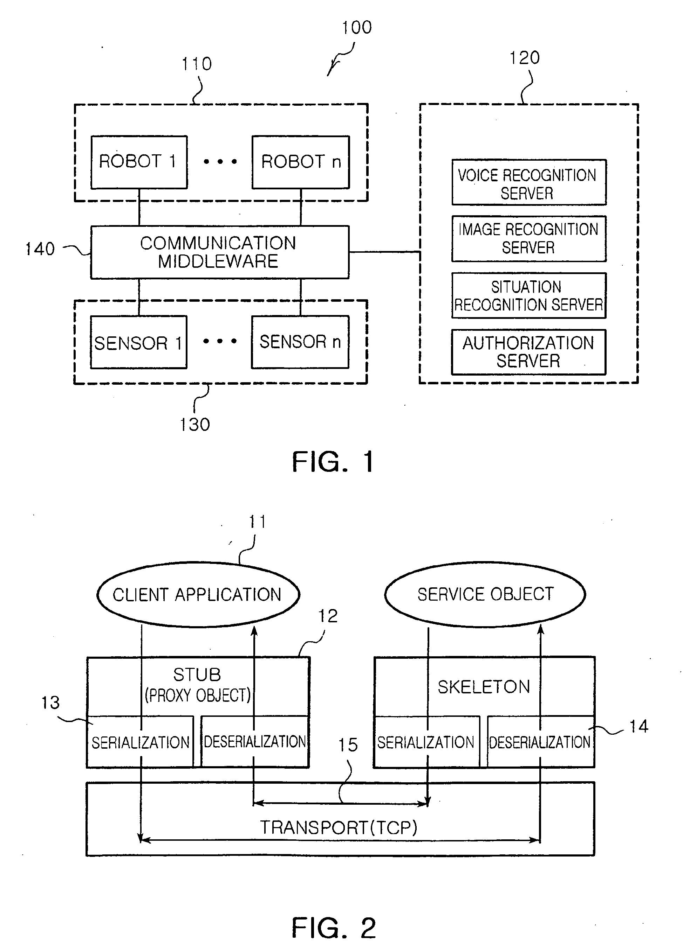

FIG. 1 is a configuration view illustrating a structure of the network robot system 100 according to an exemplary embodiment of the present invention.

Referring to FIG. 1, the network robot system 100 includes a plurality of robots 110, a server 120 and a plurality of sensors 130, and a middleware 140 for enabling communication between these.

Each of the plurality of robots 110 is a low-cost hardware robot having basic sensing and processing capabilities, and its voice and image recognition functions are supported by the high-capacity server 120.

The server 120 may include a voice recognition server, an image recognition server, a situation recognition server and an authorization server. The server 120 collects and distributes sensing information on an external environment and situation information on a user obtained by the situation recognition server and transmits the information to the plurality of robots 110.

The plurality of sensors 130 are embedded in a surrounding environment and transmit the sensing information to the server 120 via the middleware 140.

The middleware 140 enables communication between the plurality of robots 110 and the server 120. Thereby, the plurality of robots 110 may utilize the voice, image and situation recognition functions of the server 120, and the server 120 may order commands such as move command to the robots 110. Now, a structure of the middleware 140 will be explained in greater detail.

A process of remote control calling according to a structure of a middleware in a general distributed system will be briefly described with reference to FIG. 2. Then, a middleware structure, according to an exemplary embodiment of the present invention, expanded from the existing distributed communication middleware, will be described.

Referring to FIG. 2, in general, a middleware may include a stub and skeleton Transmission Control Protocol (TCP) layer 12, serialization and deserialization layers 13 and 14 for encoding and decoding, and a transport (TCP) layer 15. In the general middleware, a remote control calling involves a client 11 requesting for a remote calling by using the stub 12 generated by an interface definition language (IDL) compile. Then, the calling information is encoded and packed in the next layer of serialization 13 and transmitted via the transport layer 15. In a case of general operations, feasibility of calling is determined first and then actual calling is performed. Then, the server decodes a message including the calling information transmitted from the middleware in the deserialization layer 14 and calls an object. As a result of the calling, the object is encoded in the server and transmitted back to the client. That is, the result obtained from the service object is encoded in the serialization layer 13 and transmitted to a client application 11 via the transport layer 15.

Hereinafter, the middleware, according to an exemplary embodiment of the present invention, expanded from the above-described structure of the general middleware, will be described with reference to accompanying drawings.

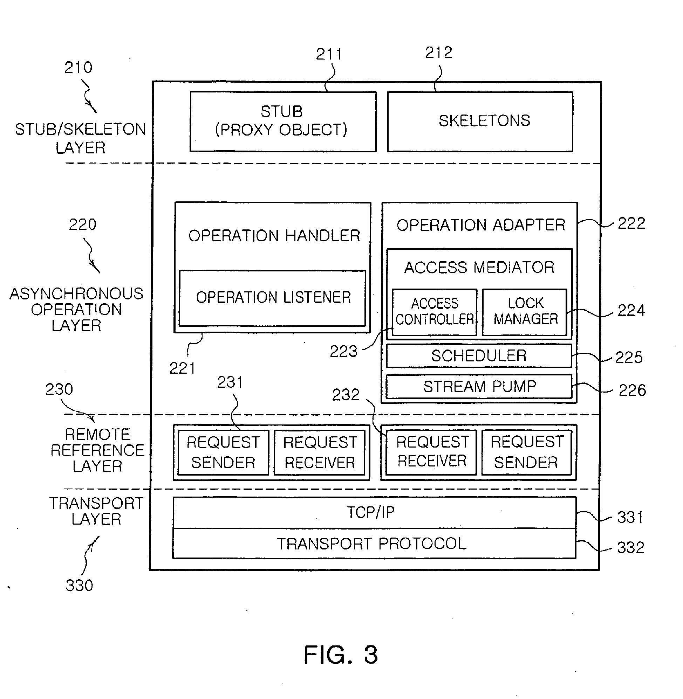

FIG. 3 is a configuration view illustrating a communication layer structure in the network robot system according to an exemplary embodiment of the present invention.

Referring to FIG. 3, the communication middleware 140 includes a stub and skeleton layer 210, an asynchronous operation layer 220, a remote reference layer 230 and a transport layer 240, and a remote calling is performed by message transmission.

The stub and skeleton layer 210 is a layer actually called by a client requesting for calling of an object when actually calling the object. In this case, the stub (proxy object) 211 is a party requesting calling of a proxy object at the client side and the skeleton layer 212 is a party receiving the request for calling.

The asynchronous operation layer 220 is a layer for performing asynchronous operations so as to send back operations performed for a long term such as in navigation, voice synthesis, and the like immediately after the request is made and check the result later when needed. In this case, a function for performing asynchronous operations is defined as an operation handle type and the asynchronous operation layer 220 returns the object of the operations performed for a long term. Such an operation handle provides an interface capable of checking the status of the long-term asynchronous operations, controlling the long-term asynchronous operations and obtaining a result of the long-term asynchronous operations.

The asynchronous operation layer 220 includes an operation handler 221 and an operation adaptor 222. The operation adaptor 222 includes an access mediator having an access controller 223 and a lock manager 224, a scheduler 225 and a stream pump 226. In this case, operations other than asynchronous operations do not go through the asynchronous operation layer 220.

The operation handler 221 is in charge of processing asynchronous operations, at the client side, defined by the interface of the operation handle and transmits a request for performing an operation to the operation adaptor 222 at the server side.

The operation adaptor 222 allocates an independent thread for processing each asynchronous operation requested by the operation handler 221 at the client side and inserts the thread to a queue of the scheduler 225. In this case, if it is a multi-session, one operation being processed in one session may also be requested from another session. Accordingly, the lock manager 224 performs simultaneous access control in the multi-session and also performs access control for the request for the operation by the access controller 224.

The stream pump 226 processes large data such as one of voice and image data transmitted in a streaming format.

The remote reference layer 230 packs and transmits the calling information, and in the case of general operations, determines the feasibility of calling and performs the actual calling. However, in the case of asynchronous operations, the actual calling is performed via the asynchronous operation layer 220. The remote reference layer 230 includes a request sender 231 and a request receiver 232 which are provided at both of the client side and the server side. The request sender 231 encodes and packs the transmission message and transmits the message to the request receiver 232 at the server side. The request receiver 232 decodes the transmitted message to call the object, and a result is transmitted to the client side via the request sender at the server side.

The transport layer 240 is in charge of actual connection and employs Transmission Control Protocol (TCP) based on "connection-oriented" communication, with consideration for connection of the robots to a private network.

Since general operations are performed synchronously, data is on standby until an operation is completed. However, in the case of operations performed for a long term, there needs a function for returning them immediately after a request is received and checking a result later when needed. This can be accomplished by performing asynchronous operations by using the asynchronous operation layer of the middleware.

Therefore, a process of performing communication by using asynchronous operations, which supports transmission of the operations performed for a long term and large data such as in robot navigation, voice synthesis of one of a robot and a software robot, image processing in the middleware having the above-described configuration, will be described hereunder with reference to accompanying drawings.

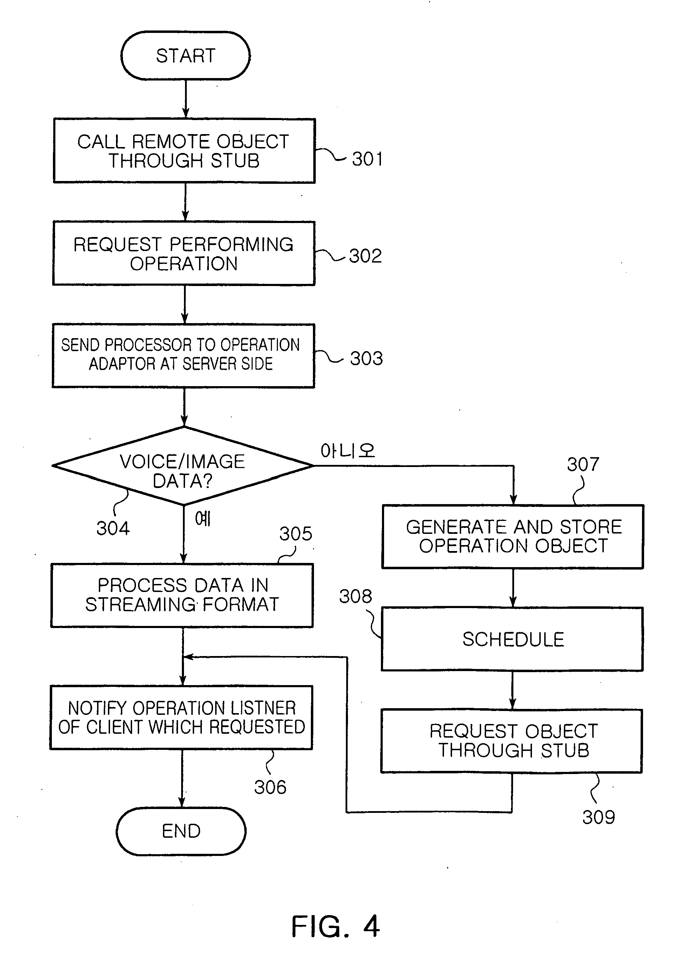

FIG. 4 is a flowchart illustrating a process of communication in the asynchronous operation layer in the network robot system according to an exemplary embodiment of the present invention.

Referring to FIG. 4, the client requesting for calling of an object in the middleware calls a stub of the corresponding remote object in operation 301. In this case, a function for asynchronous operations is defined as an operation handle type. The operation handler of the middleware processes the asynchronous operations, at the client side, defined by such an interface.

In operation 302, the operation handler 221 of the middleware 140 requests of the operation adaptor 222 to perform the asynchronous operations at the server side and waits for a result. At this point, the operation handler 221 may perform one of operations of: waiting for the operation to be completed at the server side, waiting for only a predetermined time, and terminating the performance of the operation in the middle. In this case, the result for the request is received by an operation listener included in the operation handler 221.

When the operation handler 221 requests for an asynchronous operation, an asynchronous processor is forwarded to the operation adaptor 222 in the middleware in operation 303. That is, the operation handler 221 encodes and sends the request message for the asynchronous operation to the server side via the request sender 231. Accordingly, the server decodes and sends the request message received through the request receiver 232 to the operation adaptor 222 as an operation object.

Then, the server prepares to perform the operation requested in operation 304. At this point, the server checks whether the data for the operation is one of voice and image data.

As a result, if the data is large like one of image and voice, the middleware performs the operation for one of the image and voice data by using the stream pump 226 contained in the operation adaptor 222 in operation 305. In this case, the large data is transmitted in streaming format.

Then, in operation 306, when the middleware finishes performing the operation, a result of the operation is transmitted to the operation listener of the client which requested the operation.

However, according to the result checked in operation 304, if the data is not one of image and voice data, the middleware generates an operation object "provide operation" at the server side and stores it in the queue in operation 307.

Then, if the operation requests are made from many clients, the middleware schedules performing of the operations. That is, the middleware allocates a work thread for each operation request via a scheduler 225 included in the operation adaptor 222 and performs the operation object stored in the queue one by one. At this point, the operation adaptor 222 of the middleware requests for the object via the stub 211 in operation 309, and then proceeds to operation 306 in which it forwards the operation performance result to the client side.

In such an asynchronous operation process, since it takes relatively long time to perform a long-term operation, there may be a request for the same operation which is already being performed. Therefore, while the operation is performed at the server side, the middleware may do one of the following: make the requested operation on standby via the operation handler 221 at the client side or may request for simultaneous performance.

In addition, after the request for performing a long-term operation is made, the middleware may interrupt the performance of the operation before completion. The middleware provides interrupt function operations capable of interrupting only the operations requested by the middleware itself and interrupting all operations being performed or on standby among the same type of operations.

Hereinafter, an encoding method of the data of a transmission message transmitted between robots (client) and a server via the remote reference layer of the middleware in the network robot system, according to an exemplary embodiment of the present invention, will be described. The encoding method is expressed in Backus-Naur form (BNF).

Data encoding is divided into two cases depending on whether the type of data is known beforehand at the receiving side (server) of the message or not. When a data type is known beforehand, the data type is not included in data encoding to minimize the size of the message. On the other hand, when a data type is not known, the data type information is added before the actual data encoding in order for the receiver side to know the type of data to be received. When the type information is added as described above, 't' is added before the name of a terminal.

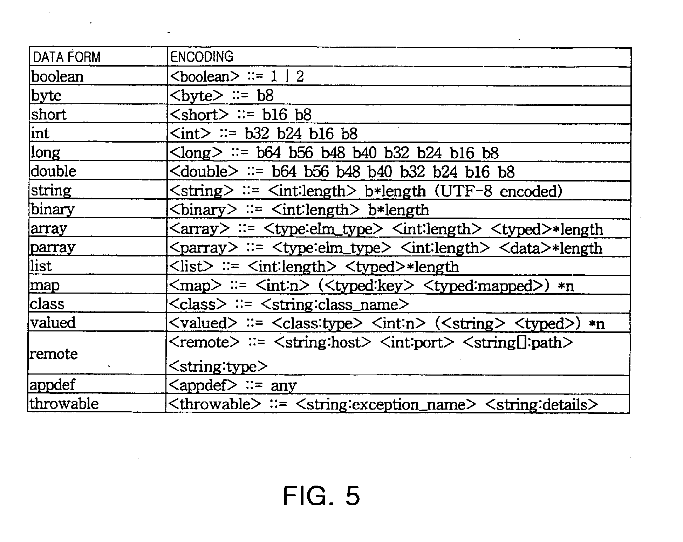

A data format according to the data encoding described above will now be described with reference to FIG. 5.

'boolean' is a data form for expressing a logical value, and true is 1 and false is 2, expressed in 1 byte, respectively.

'byte' indicates a bit-signed integer, which has a value ranging from minimum -128 to maximum 127.

'short' indicates a 16-bit signed integer, which has a value ranging from minimum -2¹⁵ to maximum 2¹⁵-1. 'short' is encoded into multiple bytes by big-endian encoding.

'int' indicates a 32-bit signed integer, which has a value from minimum -2³¹ to maximum 2³¹-1. 'int' is encoded by big-endian encoding.

'long' indicates a 64-bit signed integer, which has a value from minimum -2⁶³ to maximum 2⁶³-1. 'long' is encoded by big-endian encoding.

'double' indicates a 64-bit signed floating point number and is encoded by "IEEE floating point number" expression.

'string' is a data form indicating a string and is a byte string encoded in UTF-8 format. 'string' includes a byte length of an actual string in the first four bytes. A length of 0 indicates a zero-length string (" "), and a length of -1 indicates a null string.

'binary' is a data form for a byte array and includes a length of an actual byte array in the first four bytes as <int> form value. A length of -1 indicates a null.

'array' records an array of an arbitrary data form. In this case, a length of an array ('length') is encoded in 'int' form, and respective element data of the array are encoded sequentially. A length of -1 indicates a null string and a length of 0 indicates a 0 length of array. When using an object-oriented language, a type T array (i.e., T[]) may include not only the type T data but also arbitrary types of data derived from the type T as the elements of the array. In addition, when an interface such as Java language is supported, all types of data for realizing the interface may be included. Therefore, the elements of the array are encoded by an encoding method in which the type information is included separately for each element data.

'parray' is a data form for an array of basic data forms. The encoding method is similar to that of the 'array' data form, but the element array value must be in the basic data forms (boolean, byte, short, int, long, double, string and binary). Since 'parray' is one of an array of basic data forms and an array of element types which are impossible to be derived, the data from the elements is identical to predetermined array element types. Thus, there is no need to record the type information of the respective elements, different from "array" described above.

'list' is a data form for a variable length list of an arbitrary data type. The encoding method is similar to that of 'array' described above, but the data type name ("elm_type") of an element object, which is placed at the very first position in "array" is not included. Also, the data types of the data elements included in the list are not restricted.

'map' is an encoding method for mapping information of ordered pairs of arbitrary types of key and value data. In this encoding method, the number of entries included in the mapping is located first and then the ordered pairs of key and value are recorded in order. A negative value of 'length' means a null value. The 'key' and 'value' data stored may include arbitrary types and thus type codes are added for encoding.

'valued' is an encoding method for an arbitrary type of object. The encoding range of the object includes only member data included in the object but not methods and other static members. In this encoding method, the number of members constituting the object is placed in the first four bytes and then member name (string) and member object (typed) are encoded in ordered pairs for each member constituting the object.

'valued' encodes the object by encoding ordered pairs of name and value of each member constituting the object. In the encoding method, the name of the same member is redundantly repeated while encoded when a plurality of the same type of objects such as array and list are encoded. This increases the size of a request message and time for processing the calling when calling a remote method.

'remote' is a method of encoding a reference of a remote object. In the encoding method, the IP address (host name) and the port number of the communication middleware server, in which the remote object is located, come first and an identifier path of the object in the server comes next as a string form of array value, and the name of a remote type in the corresponding remote object comes last. In this case, when an object already being encoded is to be encoded again, the reference uses a special identifier to refer to the previously encoded one. This prevents the problem otherwise perpetuated according to the above-described 'valued' encoding, in which an already encoded object is encoded again to result in an infinite encoding process when the member of the object references itself directly or indirectly.

'appdef' uses a method agreed beforehand between the parties sending and receiving the data and may solve the disadvantage exhibited in the "valued" encoding method. However, in this method, a caller and a non-caller should use the same data encoding and decoding methods. In the type appending method (tappdef), an encoding tag in a string format for informing the counterpart of the data encoding method is sent to allow the counterpart to use a suitable decoder. In general, the encoding tag uses the type (class) name of the data being encoded.

'throwable' is an encoding method expressing an exception object and encodes the name of the exception object (exception_name) and the details on the exceptional situation. If the value of the exception object name is null, 'throwable' is regarded as null. The name of the exception object generally uses the type name of the exception object generated, and the details is encoded as null unless there is an additional explanation.

Now, a method of encoding messages transmitted between the robots and the server in a network service system, based on the data encoding method described above, will be described.

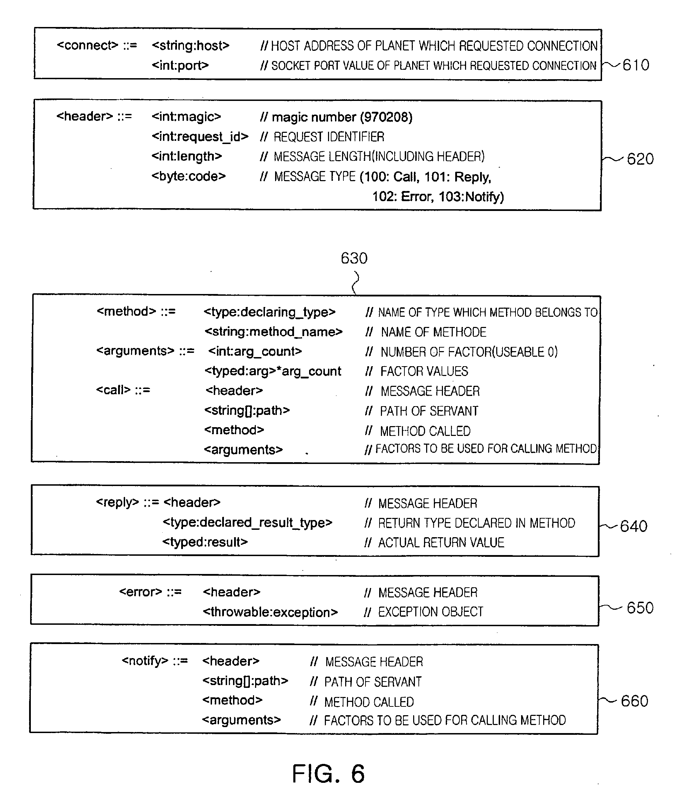

Messages are encoded in BNF in an exemplary embodiment of the present invention and the messages are as shown in FIG. 6.

A connection request message (connect) 610 is a message transmitted to request connection to start communication from the robot (client side) to the server. The connection request message 610 is transmitted by the party, which tried connection to the counterpart, after TCP socket connection is established between the robots and the server, but is not used thereafter.

All messages except for the connection request message 610 contain a designated header in the foremost place. Such a header 620 includes 'magic', 'request_id', 'length' and 'code'. 'magic' is a 4-byte fixed number notifying a communication middleware message and uses a decimal number of 970208. 'request_id' is a request identifier, which is solely assigned to each one of 'call' and 'notify' messages and increases in value for each message. The 'length' is a value indicating a size of a message including the header. In addition, 'code' is a 1-byte value recording the type of message and represents the following in Table 1 below.

**Table 1**

| Code | Type |
|---|---|
| 100 | Call message |
| 101 | Reply message |
| 102 | Error message |
| 103 | Notify message |

A code value of 100 in the header indicates a call message, and as shown in FIG. 6, the call message 630 is sent from a caller to a callee to call a method (operation) of a designated remote object. The message format of the call message 630 includes a message header, a path of the object, a method being called, and a factor to be used for calling as in BNF. In this case, 0 number of factors indicates calling a method having no factors.

A code value of 101 in the header indicates a reply message, and as shown in FIG. 6, the reply message 640 is a message for sending a result of calling the remote object by the call message 630 and performing the calling at the side of the callee to the caller. In the message format of the reply message 640, the header comes first, and a return type value declared in the definition of the method called and an actual operation return value comes next. 'req_id' in the header of the reply message 640 has to use 'request_id' value described in the call message 630 in order to provide 'pairing' information of the calling result. The type of data returned is clearly known from the return value of the method. Nonetheless, the return type information declared in the method is sent separately because the values of types obtained from the corresponding type may be returned, in addition to the type with the actual return value declared.

A code value of 102 in the header indicates an error message, and as shown in FIG. 6, the error message 650 is used for transmitting an exception object generated at the side of the callee to the caller when a remote object calling fails due to exceptions. In the message format of the error message 650, a message header comes first and the exception object comes next. In this case, in order to inform which calling caused the error, the request_id of the error message header must use the request_id value described in the call message.

A code value of 102 in the header indicates a notify message, and as shown in FIG. 6, the notify message 660 notifies a specific event. This is similar to the call message 630, but does not wait for a reply message 640. The message format of the notify message 660 includes a message header, a path of the object, a method being called, and lastly a factor to be used for calling. A 0 number of factor indicates calling a method having no factors.

According to the present invention as described above, basic functions of the robots are effectively provided from the server via communication between the robots and the server. Also, the communication framework of the middleware uses a binary message encoding method in calling the remote object to minimize a transmission message. This allows the network robot system of the present invention to be easily mounted in a device environment with limited resources such as an embedded system.

In addition, the network robot system according to the present invention may be mounted in robots developed in various languages and operating systems, enabling easy and effective remote communication with the server. The network robot system is easily connected to a private network using an internet router using TCP, thereby enabling communication in any type of networks.

According to the present invention as set forth above, a network robot system employs a sensor embedded in an external environment and a high-function server in a remote place instead of improving processing functions of robots, thereby ultimately improving the performance of the robots. Also, the network robot system performs an asynchronous operation to effectively process transmission of large data and minimizes a transmission message by using a binary message encoding method for remote object calling. As a result, efficient communication is enabled with a device having relatively limited resources.

While the present invention has been shown and described in connection with the exemplary embodiments, it will be apparent to those skilled in the art that modifications and variations can be made without departing from the spirit and scope of the invention as defined by the appended claims.

## Claims

1. A communication method in a network robot system having a middleware processing communication between a plurality of sensors, a server, and a robot, the method comprising:
setting previously a communication framework of the middleware for distributed processing by using the plurality of sensors and the server; and
performing a communication between the plurality of sensors, the server and the robot by using the communication framework set previously,
wherein one of synchronous and asynchronous operations is performed according to a size of data for a remote object called from the robot.

2. The method of claim 1, wherein the setting previously a communication framework of the middleware comprises:
setting a stub and skeleton layer commanding and receiving a remote calling the remote object according to an object calling request of the robot;
setting an asynchronous operation layer performing the asynchronous operation according to a size of data of the remote object called by the remote calling command;
setting a remote reference layer packing and sending information on the remote calling; and
setting a transport layer connecting the robot and the server by using a transport protocol according to the remote calling.

3. The method of claim 2, wherein the setting an asynchronous operation layer is set region for requesting to perform the asynchronous operation according to the remote calling of the object and region for performing the asynchronous operation to immediately send a result of the requesting to perform the asynchronous operation and to check the result when it is needed later.

4. The method of one of claims 1 to 3, wherein the performing communication between the plurality of sensors, the server, and the robot comprises:
remote calling the remote object called by the robot at a client side of the communication framework set previously;
requesting to perform an operation for the remote calling;
encoding a transmission message for the requesting to perform an operation;
sending the encoded transmission message;
performing the asynchronous operation at a server side of the communication framework set previously when a size of data for the remote object is large;
immediately sending a result of the performing the asynchronous operation to the client side; and
performing the synchronous operation via a scheduling when the size of data for the remote object is not large.

5. A network robot system comprising:
a robot providing services by recognizing external environment information;
a plurality of sensors for distributed processing of functions of the robot sensing the external environment information;
a server for distributed processing of service-processing functions of the robot according to the external environment information;
a middleware connecting the plurality of sensors located in a remote place, the server and the robot and setting a communication framework previously for remote communication between the plurality of sensors, the server, and the robot,
wherein the middleware performs synchronous and asynchronous operations according to a size of data for a remote object called from the robot.

6. The system of claim 5, wherein the communication framework of the middleware comprises:
a stub and skeleton layer commanding and receiving a remote calling with respect to the remote object according to an object calling of the robot;
an asynchronous operation layer performing the asynchronous operation according to a size of data of the remote object called by the remote calling command;
a remote reference layer packing and sending information on the remote calling;
a transport layer connecting the robot and the server by using a transport protocol according to the remote calling.

7. The system of claim 6, wherein the asynchronous operation layer comprises:
an operation handler requesting to perform the asynchronous operation according to the remote calling of the remote object; and
an operation adaptor performing the asynchronous operation to immediately send a result of the requesting to perform the asynchronous operation and to check the result when it is needed later.

8. The system of claim 7, wherein the operation adaptor performs the asynchronous operation when the size of data for the remote object is large and sends a result of the asynchronous operation execution to a client side.

9. The system of claim 7 or 8, wherein the operation adaptor comprises a scheduler performing a scheduling when the size of data for the remote object is not large and performs the asynchronous operation by the scheduling.

10. The system of one of claims 6 to 9, wherein the remote reference layer comprises:
a request sender encoding a transmission message for the requesting to perform an operation; and
a request receiver decoding the encoded transmission message,
wherein the request sender and the request receiver are included for the robot side and the server side, respectively.

## Patentansprüche

1. Ein Kommunikationsverfahren in einem Netzwerk-Robotersystem, welches eine Middleware-Verarbeitungskommunikation zwischen einer Mehrzahl von Sensoren, einem Server und einem Roboter aufweist, wobei das Verfahren umfasst:
Vorab-Einstellen eines Kommunikations-Frameworks der Middleware zum verteilten Verarbeiten unter Verwendung der Mehrzahl von Sensoren und des Servers; und
Ausführen einer Kommunikation zwischen der Mehrzahl von Sensoren, dem Server und dem Roboter unter Verwendung des vorab-eingestellten Kommunikations-Frameworks,
wobei ein synchroner oder asynchroner Vorgang entsprechend einer Datengröße für ein vom Roboter aufgerufenes entferntes Objekt ausgeführt wird.

2. Verfahren nach Anspruch 1, wobei das Vorab-Einstellen eines Kommunikations-Frameworks der Middleware umfasst:
Einstellen einer Kontroll- und Rahmenebene, die einen entfernten Aufruf des entfernten Objekts entsprechend einer Objektaufrufanfrage des Roboters anweist und empfängt;
Einstellen einer asynchronen Vorgangsebene, die den asynchronen Vorgang entsprechend einer Datengröße des durch die entfernte Aufrufanweisung aufgerufenen entfernten Objekts ausführt;
Einstellen einer entfernten Bezugsebene, die Information des entfernten Aufrufs zusammenfasst und sendet; und
Einstellen einer Transportebene, die den Roboter und den Server unter Verwendung eines Transportprotokolls entsprechend dem entfernten Aufruf verbindet.

3. Verfahren nach Anspruch 2, wobei das Einstellen einer asynchronen Vorgangsebene einen Bereich zum Anfragen, um den asynchronen Vorgang entsprechend dem entfernten Aufruf des Objekts auszuführen, und einen Bereich zum Ausführen des asynchronen Vorgangs einstellt, um ein Ergebnis des Anfragens zum Ausführen des asynchronen Vorgangs unverzüglich zu senden und um das Ergebnis zu überprüfen, wenn es später benötigt wird.

4. Verfahren nach einem der Ansprüche 1 bis 3, wobei das Ausführen von Kommunikation zwischen der Mehrzahl von Sensoren, dem Server und dem Roboter umfasst:
entferntes Aufrufen des durch den Roboter aufgerufenen entfernten Objekts auf einer Clientseite des vorab-eingestellten Kommunikations-Frameworks;
Anfragen, um einen Vorgang des entfernten Aufrufens auszuführen;
Entschlüsseln einer Übertragungsnachricht des Anfragens, um einen Vorgang auszuführen;
Senden der entschlüsselten Übertragungsnachricht;
Ausführen des asynchronen Vorgangs auf einer Serverseite des vorab-eingestellten Kommunikations-Frameworks, wenn eine Datengröße für das entfernte Objekt groß ist;
unverzügliches Senden eines Ergebnisses vom Ausführen des asynchronen Vorgangs an die Clientseite; und
Ausführen des synchronen Vorgangs über eine Zeitplanung, wenn die Datengröße für das entfernte Objekt nicht groß ist.

5. Netzwerk-Robotersystem, umfassend:
einen Roboter, welcher Dienste durch Erfassen von externer Umgebungsinformation bereitstellt;
eine Mehrzahl von Sensoren zum verteilten Verarbeiten von Funktionen des Roboters, welcher die externe Umgebungsinformation abtastet;
einen Server zum verteilten Verarbeiten von Dienstverarbeitungsfunktionen des Roboters entsprechend der externen Umgebungsinformation;
eine Middleware, welche die Mehrzahl von sich an einem entfernten Ort befindenden Sensoren, den Server und den Roboter verbindet und welche ein Kommunikations-Framework zur entfernten Kommunikation zwischen der Mehrzahl von Sensoren, dem Server und dem Roboter vorab-einstellt,
wobei die Middleware synchrone und asynchrone Vorgänge entsprechend einer Datengröße für ein vom Roboter aufgerufenes entferntes Objekt ausführt.

6. System nach Anspruch 5, wobei das Kommunikations-Framework der Middleware umfasst:
eine Kontroll- und Rahmenebene, die einen entfernten Aufruf mit Bezug auf das entfernte Objekt entsprechend einem Objektaufruf des Roboters anweist und empfängt;
eine asynchrone Vorgangsebene, die den asynchronen Vorgang entsprechend einer Datengröße des durch die entfernte Aufrufanweisung aufgerufenen entfernten Objekts ausführt;
eine entfernte Referenzebene, die Information des entfernten Aufrufs zusammenfasst und sendet;
eine Transportebene, die den Roboter und den Server unter Verwendung eines Transportprotokolls entsprechend dem entfernten Aufruf verbindet.

7. System nach Anspruch 6, wobei die asynchrone Vorgangsebene umfasst:
einen Vorgangshandhaber, der anfragt, um den asynchronen Vorgang entsprechend dem entfernten Aufruf des entfernten Objekts auszuführen; und
einen Vorgangsadaptierer, der den asynchronen Vorgang ausführt, um ein Ergebnis des Anfragens zum Ausführen des asynchronen Vorgangs unverzüglich zu senden und um das Ergebnis zu überprüfen, wenn es später benötigt wird.

8. System nach Anspruch 7, wobei der Vorgangsadaptierer den asynchronen Vorgang ausführt, wenn die Datengröße des entfernten Objekts groß ist und ein Ergebnis der asynchronen Vorgangsausführung an eine Clientseite sendet.

9. System nach Anspruch 7 oder 8, wobei der Vorgangsadaptierer einen Zeitplaner umfasst, der eine Zeitplanung ausführt, wenn die Datengröße für das entfernte Objekt nicht groß ist, und der den asynchronen Vorgang durch die Zeitplanung ausführt.

10. System nach einem der Ansprüche 6 bis 9, wobei die entfernte Referenzebene umfasst:
einen Anfragesender, der eine Übertragungsnachricht für die Anfrage zum Ausführen eines Vorgangs verschlüsselt; und
einen Anfrageempfänger, der die verschlüsselte Übertragungsnachricht entschlüsselt,
wobei der Anfragesender und der Anfrageempfänger für die Roboterseite bzw. die Serverseite enthalten sind.

## Revendications

1. Procédé de communication dans un système de robot en réseau comportant un intergiciel traitant une communication entre une pluralité de capteurs, un serveur et un robot, le procédé comprenant :
l'établissement préalable d'une structure de communication de l'intergiciel pour un traitement distribué en utilisant la pluralité de capteurs et le serveur ; et
la réalisation d'une communication entre la pluralité de capteurs, le serveur et le robot en utilisant la structure de communication préalablement établie,
dans lequel l'une des opérations synchrone et asynchrone est effectuée en fonction d'une taille de données pour un objet à distance appelé à partir du robot.

2. Procédé selon la revendication 1, dans lequel l'établissement préalable d'une structure de communication de l'intergiciel comprend :
l'établissement d'une couche talon et squelette commandant et recevant un appel à distance de l'objet à distance en fonction d'une requête d'appel d'objet du robot ;
l'établissement d'une couche d'opération asynchrone effectuant l'opération asynchrone en fonction d'une taille de données de l'objet à distance appelé par la commande d'appel à distance ;
l'établissement d'une couche de référence à distance mettant en paquets et envoyant des informations lors de l'appel à distance ; et
l'établissement d'une couche de transport connectant le robot et le serveur en utilisant un protocole de transport en fonction de l'appel à distance.

3. Procédé selon la revendication 2, dans lequel l'établissement d'une couche d'opération asynchrone est une zone établie pour requérir l'accomplissement de l'opération asynchrone en fonction de l'appel à distance de l'objet et une zone pour l'accomplissement de l'opération asynchrone afin d'envoyer immédiatement un résultat de la requête d'accomplissement de l'opération asynchrone et de vérifier le résultat s'il est nécessaire ultérieurement.

4. Procédé selon l'une des revendications 1 à 3, dans lequel la réalisation d'une communication entre la pluralité de capteurs, le serveur et le robot comprend :
l'appel à distance de l'objet distant appelé par le robot à un côté client de la structure de communication préalablement établie ;
la requête visant à réaliser une opération pour l'appel à distance ;
le codage d'un message de transmission pour la requête visant à réaliser une opération ;
l'envoi du message de transmission codé ;
la réalisation de l'opération asynchrone à un côté de serveur de la structure de communication préalablement établie lorsqu'une taille de données de l'objet distant est élevée ;
l'envoi immédiat d'un résultat de la réalisation de l'opération asynchrone au côté client ; et
la réalisation de l'opération synchrone, au travers d'une programmation, lorsque la taille de données de l'objet distant n'est pas élevée.

5. Système de robot en réseau comprenant ;
un robot fournissant des services en reconnaissant des informations d'environnement externe ;
une pluralité de capteurs pour un traitement distribué de fonctions du robot détectant les informations d'environnement externe ;
un serveur pour un traitement distribué de fonctions de traitement de services du robot en fonction des informations d'environnement externe ;
un intergiciel connectant la pluralité de capteurs situés en un lieu distant, le serveur et le robot et établissant au préalable une structure de communication pour une communication à distance entre la pluralité de capteurs, le serveur et le robot,
dans lequel l'intergiciel effectue des opérations synchrone et asynchrone en fonction d'une taille de données pour un objet à distance appelé à partir du robot.

6. Système selon la revendication 5, dans lequel la structure de communication de l'intergiciel comprend :
une couche talon et squelette commandant et recevant un appel à distance par rapport à l'objet à distance en fonction d'un appel d'objet du robot ;
une couche d'opération asynchrone effectuant l'opération asynchrone en fonction d'une taille de données de l'objet à distance appelé par la commande d'appel à distance ;
une couche de référence à distance mettant en paquets et envoyant des informations lors de l'appel à distance ;
une couche de transport connectant le robot et le serveur en utilisant un protocole de transport en fonction de l'appel à distance.

7. Système selon la revendication 6, dans lequel la couche d'opération asynchrone comprend :
un gestionnaire d'opérations requérant l'accomplissement de l'opération asynchrone en fonction de l'appel à distance de l'objet à distance ; et
un adaptateur d'opérations accomplissant l'opération asynchrone afin d'envoyer immédiatement un résultat de la requête d'accomplissement de l'opération asynchrone et de vérifier le résultat s'il est nécessaire ultérieurement.

8. Système selon la revendication 7, dans lequel l'adaptateur d'opérations accomplit l'opération asynchrone lorsque la taille de données de l'objet distant est élevée et envoie un résultat de l'exécution de l'opération asynchrone à un côté client.

9. Système selon la revendication 7 ou 8, dans lequel l'adaptateur d'opérations comprend un programmateur effectuant une programmation lorsque la taille de données de l'objet distant n'est pas élevée et accomplit l'opération asynchrone par la programmation.

10. Système selon l'une des revendications 6 à 9, dans lequel la couche de référence à distance comprend ;
un émetteur de requête codant un message de transmission pour la requête visant à réaliser une opération ; et
un récepteur de requête décodant le message de transmission codé,
dans lequel l'émetteur de requête et le récepteur de requête sont inclus au côté robot et au côté serveur, respectivement.
